# EUROPÄISCHE PATENTSCHRIFT

(11) **EP 1 423 998 B1**
(45) Veröffentlichungstag und Bekanntmachung des Hinweises auf die Patenterteilung: **18.01.2006**
(21) Anmeldenummer: 03027057.3
(22) Anmeldetag: 25.11.2003
(51) Int. Cl.: A01B 29/04

(54) **Bodenwalze**
Soil roller
Rouleau pour sol

(30) Priorität: 30.11.2002 DE 10256061
(43) Veröffentlichungstag der Anmeldung: 02.06.2004
(73) Patentinhaber: Amazonen-Werke H. Dreyer GmbH & Co. KG, 49205 Hasbergen (DE)
(72) Erfinder: Reinke, Wilfried, 26123 Oldenburg (DE)

(56) Entgegenhaltungen:
- EP-A- 0 338 646
- DE-U- 8 026 581
- DE-U- 8 610 054

## Beschreibung

Die Erfindung betrifft eine Bodenwalze gemäß des Oberbegriffes des Patentanspruches 1.

Eine derartige Bodenwalze ist durch die EP 03 38 646 A2 bekannt. Bei dieser Bodenwalze sind auf der Rückseite der Walze an einem Querträger Halterungen, die in Rückansicht gesehen nach unten offene U-förmige Querschnittsprofile oder auf ihrer Unterseite eine in Fahrtrichtung verlaufende nutähnliche Aussparung aufweisen, angeordnet. An diesen Halterungen ist ein Abstreiferstiel, der mit an einer an ihm angeordneten Aufnahmevorrichtung den eigentlichen Abstreifer mittels zweier Schrauben bildet, verschiebbar angeordnet ist. Die Ausgestaltung dieser Anordnung mit Abstreiferstiel und einer Anordnung zur Aufnahme des eigentlichen Abstreifers ist relativ aufwendig gestaltet.

Eine weitere Bodenwalze ist beispielsweise in der EP 03 09 011 B1 beschrieben. Auf der konkaven Seite des Abstreifers sind Abstandshalter angeordnet, damit die profilierten Abstreifer an der Halterung bzw. einem Halterungsbalken befestigt werden können. Jeder Abstreifer ist mittels als zwei Schrauben ausgebildeter Befestigungselemente an der Halterung befestigt. Die Schrauben stehen auf der konvexen Seite des Abstreifers über und unterliegen einem Verschleiß. Gleichzeitig stören die über die Abstreiferflächen hinausragenden Schraubenteile das Fließen der vom Walzenmantel abgestreiften Erde entlang des Abstreifers.

Der Erfindung liegt die Aufgabe zugrunde, mit einfachen Mitteln eine verbesserte Ausbildung und Befestigung der Abstreifer an ihrer Halterung zu erreichen.

Diese Aufgabe wird erfindungsgemäß durch die kennzeichnenden Merkmale des Patentanspruches 1 gelöst. Infolge dieser Maßnahmen wird auf einfachste Weise eine verdrehsichere Befestigung der Abstreifer an ihrer Halterung erreicht. Somit wird die Anpassung des Abstreifers an das Halterungsprofil erreicht. Durch die Durchprägung des Abstreifers wird gleichzeitig eine Vertiefung geschaffen, in welcher das Befestigungselement, ohne dass es die Abstreiferfläche überragt, angeordnet werden kann. Hierdurch unterliegt das Befestigungselement keinem nennenswerten Verschleiß.

Eine Anpassung an die Form der Halterung lässt sich auch dadurch erreichen, dass der Abstreifer auf seiner Oberseite im Bereich der Halterung eine Erhebung aufweist.

Um ein gutes Abstreifen der an dem Walzenmantel anhaftenden Erde zu erreichen, ist vorgesehen, dass der Abstreifer eine geradlinige Abstreiferkante aufweist, dass das Halterungsprofil des Abstreifers in einem Abstand von zumindest 5mm, vorzugsweise 10 mm von der Abstreiferkante endet, so dass der Abstreifer eine Abstreiferfläche in der Nähe des Walzenmantels aufweist.

Um eine lange Lebensdauer des Abstreifers zu erreichen, ist vorgesehen, dass der Abstreifer im Bereich der Abstreiferkante mit einer Aufpanzerung versehen ist.

Um eine geschützte und verschleißarme Anordnung des Befestigungselementes im Bereich des Abstreifers zu erreichen, ist vorgesehen, dass der Abstreifer im Bereich der Durchprägung einen Hohlraum aufweist, dass in dem Hohlraum das Befestigungselement angeordnet ist.

Um in einfacher Weise die Abstreiferkante in dem gewünschten Abstand zum Walzenmantel einstellen zu können, ist vorgesehen, dass der Abstreifer im Bereich der Halterung ein Langloch aufweist, durch welches das Befestigungselement hindurchragt.

Des weiteren wird Elementenschutz für einen Abstreifer nach Anspruch 7 beansprucht.

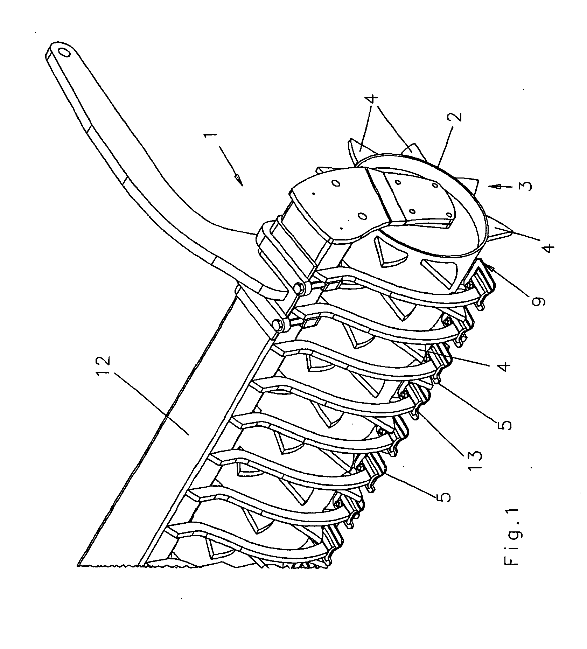

Weitere Einzelheiten der Erfindung sind der Beispielsbeschreibung und den Zeichnungen zu entnehmen. Hierbei zeigen
- Fig. 1: die Bodenwalze in Teilansicht und perspektivischer Darstellung,

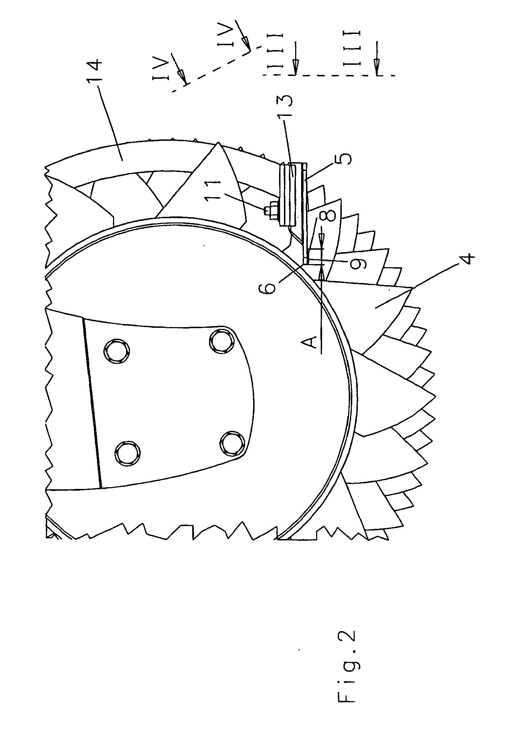

- Fig. 2: die Bodenwalze in Teilansicht, Seitenansicht und vergrößertem Maßstab,

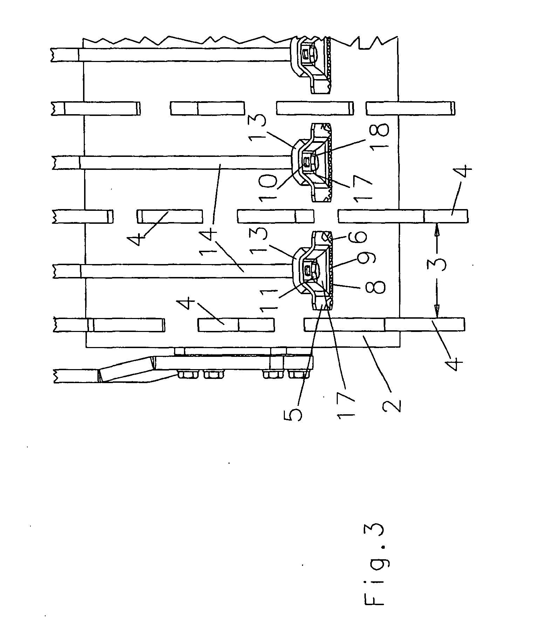

- Fig. 3: die Bodenwalze in Teilansicht in der Ansicht III - III,

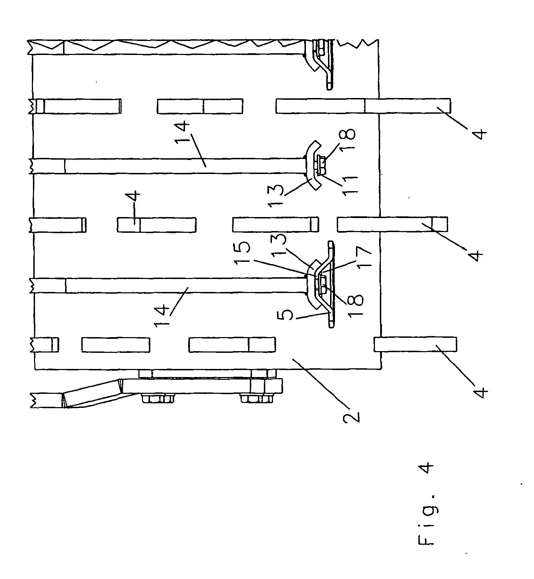

- Fig. 4: die Bodenwalze in der Ansicht IV - IV und

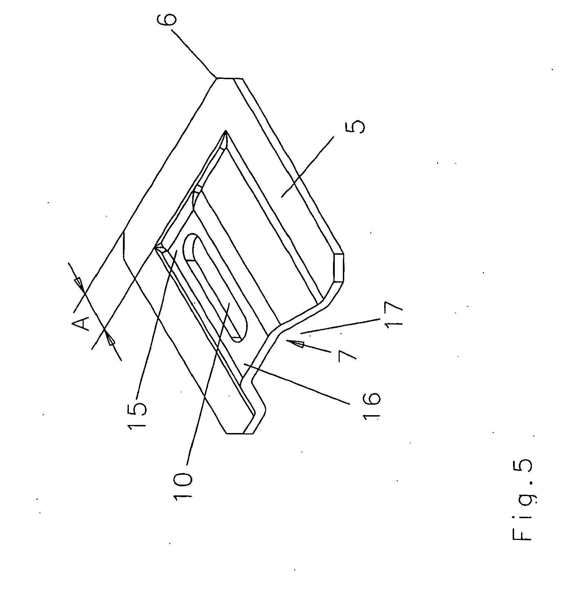

- Fig. 5: den Abstreifer in perspektivischer Darstellung.

Die Bodenwalze 1 weist den rotationssymmetrischen Walzenmantel 2 auf. Auf dem Walzenmantel 2 sind in Ringgruppen 3 zusammengefasst, zahnartige Ansätze 4 angeordnet. Zwischen den einzelnen ringförmigen Gruppen 3 ist ein Abstand vorhanden. Zwischen die einzelnen Ringgruppen 3 von Ansätzen 4 sind die Abstreifer 5 nebeneinander angeordnet. Die Abstreifer 5 dienen zum Ablösen von Erde vom Walzenmantel. Die Abstreifer weisen eine Abstreiferkante 6 auf sich, die zumindest annähernd bis zum Walzenmantel 2 der Walze 1 erstreckt. Die Abstreifer 5 weisen über einen Teil ihrer Ausdehnung einen profilierten Querschnitt 7 auf. Die Abstreifer 5 weisen eine geradlinige Abstreiferkante 6 auf. Das Halterungsprofil 7 des Abstreifers 5 endet in einem Abstand A von zumindest 5 mm, vorzugsweise 10 mm von der Abstreiferkante 6, so dass der Abstreifer 5 in der Nähe des Walzenmantels 2 die von der Abstreiferkante 6 ausgehende Abstreiferfläche 8 aufweist. Der Abstreifer 5 weist im Bereich der Abstreiferkante 6 auf seiner Unterseite eine Aufpanzerung 9 auf. Der Abstreifer 5 weist in seinem Halterungsbereich 7 das Langloch 10 auf. Der Abstreifer 11 ist mittels einer durch das Langloch 10 ragenden Schraube 11, die als Befestigungselement ausgebildet ist, an der an dem Rahmen 12 der Walze 1 angeordneten Halterung 13 einstellbar und lösbar befestigt. Die Halterung 13 ist über einen von dem als Rahmen 12 ausgebildeten Querbalken, der sich oberhalb der Bodenwalze 1 befindet, nach unten ragenden Tragarm 14 befestigt.

Die Halterung 13 weist eine in Rückansicht gesehen nach unten offenes U-förmiges Querschnittsprofil auf. Der Abstreifer 5 weist einen Halterungsbereich 7 im Bereich der Halterung 13 auf seiner Oberseite auf, der eine an die Form der Unterseite der Halterung 13 zumindest annähernd angepasste Kontur aufweist, wie der Zeichnung zeigen. Der Abstreifer 5 weist auf seiner Oberseite im Bereich der Halterung 13 eine Durchprägung 15 zur Schaffung eines U- oder v-förmigen Halterungsprofils 7 auf, wie die Zeichnungen zeigen. Durch die Durchprägung 15 weist der Abstreifer 5 auf seiner Oberseite im Bereich der Halterung eine Erhebung 16 auf. Durch die Durchprägung 15 besitzt der Abstreifer 5 im Bereich der Halterung 13 und der Durchprägung 15 einen Hohlraum 17. In diesem Hohlraum 17 ist das Befestigungselement 11 angeordnet. Der Schraubenkopf 18 der Befestigungsschraube 11 befindet sich in diesem Hohlraum 17 und ragt nicht über die Unterseite des Abstreifers 5 heraus. Hierdurch ist das Befestigungselement 11 in einem geschützten und vor verschleiß geschützten Raum auf der Unterseite des Abstreifers 5 angeordnet. Die Halterungen 13 und der Abstreifer 5 weisen in ihrem einander berührendem Bereich ein Über- bzw. Untermaß auf, so dass der Abstreifer 5 und die Halterung 13 verdrehsicher miteinander zu verspannen sind.

## Patentansprüche

1. Bodenwalze mit mehreren nebeneinander angeordneten Abstreifern, die zum Ablösen von Erde derart ausgebildet und angeordnet sind, dass sie sich mit ihrer Abstreiferkante zumindest annähernd bis zum Walzenmantel der Walze erstrecken, wobei die Abstreifer zumindest über einen Teil ihrer Ausdehnung einen profilierten Querschnitt aufweisen und mittels Befestigungselementen am/an dem Rahmen der Walze angeordneten Halterungen, vorzugsweise einstellbar befestigt sind, wobei die Halterungen (13) ein in Rückansicht gesehen nach unten offenes U-förmiges Querschnittsprofil und/oder auf ihrer Unterseite eine in Fahrtrichtung verlaufende nutähnliche Aussparung aufweisen, **dadurch gekennzeichnet, dass** der Abstreifer (5) im Bereich der Halterung (13) auf seiner Oberseite eine an die Form der Unterseite der Halterung (13) zumindest annähernd angepasste Kontur aufweist, dass der Abstreifer (5) auf seiner Oberseite im Bereich der Halterung eine Durchprägung (15) zu Schaffung eines U- oder V- förmigen Halterungsprofils (7) aufweist.

2. Bodenwalze nach Anspruch 1, **dadurch gekennzeichnet, dass** der Abstreifer (5) auf seiner Oberseite im Bereich der Halterung eine Erhebung (16) aufweist.

3. Bodenwalze nach Anspruch 1, **dadurch gekennzeichnet, dass** der Abstreifer (5) eine geradlinige Abstreiferkante (6) aufweist, dass das Halterungsprofil (7) des Abstreifers (5) in einem Abstand (A) von zumindest 5 mm, vorzugsweise 10 mm von der Abstreiferkante (6) endet, so dass der Abstreifer (5) eine Abstreiferfläche (8) in der Nähe des Walzenmantels (2) aufweist.

4. Bodenwalze nach einem oder mehreren der vorstehenden Ansprüche, **dadurch gekennzeichnet, dass** der Abstreifer (5) im Bereich der Abstreiferkante (6) mit einer Aufpanzerung (9) versehen ist.

5. Bodenwalze nach einem oder mehreren der vorstehenden Ansprüche, **dadurch gekennzeichnet, dass** der Abstreifer (5) im Bereich der Durchprägung (15) einen Hohlraum (17) aufweist, dass in dem Hohlraum (17) das Befestigungselement (11,18) angeordnet ist.

6. Bodenwalze nach einem oder mehreren der vorstehenden Ansprüche, **dadurch gekennzeichnet, dass** der Abstreifer (5) im Bereich der Halterung (13) ein Langloch (10) aufweist, durch welches das Befestigungselement (11) hindurchragt.

7. Abstreifer nach einem oder mehreren der Ansprüche 1 bis 6 für eine Bodenwalze nach einem oder mehreren der Ansprüche 1 bis 6.

## Claims

1. Soil-cultivating roller having a plurality of scrapers disposed adjacent one another, said scrapers, for loosening the ground, being configured and disposed in such a manner that they extend with their scraping edge at least approximately as far as the curved surface of the roller, wherein the scrapers include a profiled cross-section at least over a part of their extension, and mountings, which are disposed by means of securing elements on the frame of the roller, are secured preferably so as to be adjustable, wherein the mountings (13) include a U-shaped cross-sectional profile, which when viewed from the rear is open downwards, and/or a groove-like recess which extends in the direction of travel on their bottom side, **characterised in that**, in the region of the mounting (13), the scraper (5) includes on its top side (13) a contour, which is adapted at least approximately to the form of the bottom side of the mounting (13), **in that** the scraper (5) includes a stamping (15) to create a U-shaped or V-shaped mounting profile (7) on its top side in the region of the mounting.

2. Soil-cultivating roller according to claim 1, **characterised in that** the scraper (5) includes an elevation (16) on its top side in the region of the mounting.

3. Ground-cultivating roller according to claim 1, **characterised in that** the scraper (5) includes a linear scraping edge (6), **in that** the mounting profile (7) of the scraper (5) ends at a spacing (A) of at least 5 mm, preferably 10 mm from the scraping edge (6), such that the scraper (5) includes a scraping face (8) in the vicinity of the curved surface of the roller (2).

4. Ground-cultivating roller according to one or more of the preceding claims, **characterised in that** the scraper (5) is provided with an armouring (9) in the region of the scraping edge (6).

5. Ground-cultivating roller according to one or more of the preceding claims, **characterised in that** the scraper (5) includes a hollow space (17) in the region of the stamping (15), and **in that** the securing element (11, 18) is disposed in the hollow space (17).

6. Ground-cultivating roller according to one or more of the preceding claims, **characterised in that** the scraper (5) includes an elongate hole (10) in the region of the mounting (13), through which elongate hole the securing element (11) projects.

7. Scraper according to one or more of the claims 1 to 6 for a ground-cultivating roller according to one or more of the claims 1 to 6.

## Revendications

1. Rouleau pour sol doté de plusieurs racloirs disposés les uns à côté des autres, conçus pour détacher de la terre et agencés de manière à s'étendre avec leurs arêtes au moins approximativement jusqu'à l'enveloppe du rouleau, les racloirs présentant une section transversale profilée au moins sur une partie de leur extension et étant fixés à l'aide des éléments de fixation sur le ou les supports disposés sur le cadre du rouleau, de préférence de manière réglable, les supports (13) ayant un profil en coupe transversale en forme de U ouvert vers le bas si on les regarde par derrière et/ou un évidement semblable à une rainure s'étendant dans la direction de conduite si on les regarde par le bas,
**caractérisé en ce que**
le racloir (5) dans la zone du support (13) présente sur sa face supérieure un contour adapté au moins approximativement à la forme de la face inférieure du support, et le racloir (5) présente sur sa face supérieure dans la zone du support un estampage (15) pour créer un profil de support en forme de U ou de V (7).

2. Rouleau pour sol selon la revendication 1,
**caractérisé en ce que**
le racloir (5) présente une partie saillante (16) sur sa face supérieure dans la zone du support.

3. Rouleau pour sol selon la revendication 1,
**caractérisé en ce que**
le racloir (5) présente une arête de racloir (6) rectiligne, et le profil de support (7) du racloir (5) se termine à une distance (A) d'au moins 5 mm, de préférence 10 mm de l'arête de racloir (6) de sorte que le racloir (5) présente une surface de racloir (8) à proximité de l'enveloppe du rouleau (2).

4. Rouleau pour sol selon au moins l'une quelconque des revendications précédentes,
**caractérisé en ce que**
le racloir (5) est pourvu d'un blindage (0) dans la zone de l'arête de racloir (6).

5. Rouleau pour sol selon au moins l'une quelconque des revendications précédentes,
**caractérisé en ce que**
le racloir (5) présente dans la zone de l'estampage (15) une cavité (17) et l'élément de fixation (11, 18) est disposé dans la cavité (17).

6. Rouleau pour sol selon au moins l'une quelconque des revendications précédentes,
**caractérisé en ce que**
le racloir (5) présente dans la zone du support (13) un trou allongé (10) que traverse l'élément de fixation (11).

7. Racloir pour un rouleau pour sol selon au moins l'une quelconque des revendications 1 à 6.
